(19) Europäisches Patentamt
European Patent Office
Office européen des brevets

(11) EP 1 576 043 B1

(12) FASCICULE DE BREVET EUROPEEN

(45) Date de publication et mention de la délivrance du brevet:
**13.06.2012 Bulletin 2012/24**

(21) Numéro de dépôt: **03789182.7**

(22) Date de dépôt: **09.12.2003**

(51) Int Cl.:
***C08K 3/34*** *(2006.01)* ***C08L 9/00*** *(2006.01)*
***C08L 7/00*** *(2006.01)* ***C08J 5/12*** *(2006.01)*
***B60C 1/00*** *(2006.01)*

(86) Numéro de dépôt international:
**PCT/EP2003/013945**

(87) Numéro de publication internationale:
**WO 2004/056915 (08.07.2004 Gazette 2004/28)**

(54) **COMPOSITION DE CAOUTCHOUC POUR PNEUMATIQUE A BASE D UN ALUMINOSILICATE RENFORCANT**

KAUTSCHUKZUSAMMENSETZUNG FÜR REIFEN, DIE EIN VERSTÄRKENDES ALUMINOSILIKAT ENTHÄLT

RUBBER COMPOSITION FOR TYRES, BASED ON REINFORCING ALUMINOSILICATE

(84) Etats contractants désignés:
**AT BE BG CH CY CZ DE DK EE ES FI FR GB GR HU IE IT LI LU MC NL PT RO SE SI SK TR**

(30) Priorité: **19.12.2002 FR 0216444**

(43) Date de publication de la demande:
**21.09.2005 Bulletin 2005/38**

(73) Titulaires:
- **Compagnie Générale des Etablissements Michelin**
  **63040 Clermont-Ferrand Cedex 09 (FR)**
- **Michelin Recherche et Technique S.A.**
  **1763 Granges-Paccot (CH)**

(72) Inventeurs:
- **SIMONOT, Laure**
  **Greenville, SC 29607 (US)**
- **VEYLAND, Anne**
  **F-63200 Marsat (FR)**
- **LAPRA, Arnaud**
  **63100 Clermont-Ferrand (FR)**
- **CUSTODERO, Emmanuel**
  **F-63000 Chamalieres (FR)**

(74) Mandataire: **Ribière, Joel**
**M.F.P. Michelin,**
**SGD/LG/PI - F35 - Ladoux**
**63040 Clermont-Ferrand Cedex 9 (FR)**

(56) Documents cités:
**EP-A- 0 697 432** **WO-A-99/28376**
**US-A- 3 832 327**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 576 043 B1

## Description

La présente invention est relative aux compositions de caoutchoucs diéniques utilisables pour la fabrication de pneumatiques ou de produits semi-finis pour pneumatiques, en particulier de bandes de roulement de ces pneumatiques, ainsi qu'aux charges inorganiques renforçantes susceptibles de renforcer de telles compositions de caoutchouc.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure.

De nombreuses solutions ont notamment été proposées dans le passé pour abaisser la résistance au roulement et améliorer l'adhérence des pneumatiques, mais celles-ci se traduisent en général par une déchéance très importante de la résistance à l'usure.

Il est bien connu notamment que l'incorporation de charges blanches conventionnelles comme par exemple des silices ou alumines conventionnelles, de la craie, du talc, des aluminosilicates naturels tels que bentonite ou le kaolin, dans des compositions de caoutchouc utilisées pour la fabrication de pneumatiques et notamment de bandes de roulement, se traduit certes par un abaissement de la résistance au roulement et par une amélioration de l'adhérence sur sol mouillé, enneigé ou verglacé, mais aussi par une déchéance inacceptable de la résistance à l'usure liée au fait que ces charges blanches conventionnelles n'ont pas de capacité de renforcement suffisante vis-à-vis de telles compositions de caoutchouc. On qualifie généralement ces charges blanches, pour cette raison, de charges non renforçantes encore appelées charges inertes.

Une solution efficace à ce problème de résistance à l'usure insuffisante a été trouvée grâce à la mise au point récente, au cours des dix dernières années, de nouvelles compositions de caoutchouc comportant des charges inorganiques véritablement renforçantes, en particulier des silices hautement dispersibles dites "HDS" (pour *"Highly Dispersible Silica"*), qui se sont révélées capables de remplacer les noirs de carbone conventionnels pour pneumatiques (voir par exemple brevets ou demandes de brevet EP 501 227, EP 692 492, EP 692 493, EP 735 088, EP 810 258, WO99/02590, WO99/02602, WO99/28376, WO 01/96442, WO 02/30939, WO 02/31041, WO 02/083782.

Les compositions à base de silice HDS présentent toutefois l'inconvénient connu de présenter une cinétique de vulcanisation sensiblement ralentie, en règle générale d'un facteur deux à trois, par rapport aux compositions conventionnelles chargées de noir de carbone. Les durées de cuisson plus longues qui en résultent pénalisent, on le sait, la mise en oeuvre industrielle des pneumatiques ou bandes de roulement de pneumatiques à base de telles compositions.

Or, les Demanderesses ont découvert lors de leurs recherches qu'il existe d'autres types de charge inorganique renforçante, en l'occurrence des aluminosilicates spécifiques du type synthétiques, qui eux aussi peuvent être utilisés dans les compositions de caoutchouc comme de véritables charges renforçantes, c'est-à-dire capables de remplacer des noirs de carbone conventionnels pour pneumatiques comme des silices HDS.

Le document EP697432 décrit une composition à base de caoutchouc, une charge inorganique renforçante selon la formule $mM \cdot xSiOy \cdot zH_2O$ et un agent de liaison pour bandes de roulement de pneus.

De manière inattendue, ces aluminosilicates de synthèse spécifiques offrent non seulement une excellente capacité de renforcement aux compositions de caoutchouc les contenant, grâce à une aptitude à la dispersion élevée, proche de celle accessible avec des silices type HDS, mais encore une cinétique de vulcanisation améliorée comparativement à l'emploi de telles silices.

En conséquence, un premier objet de l'invention concerne une composition de caoutchouc à base d'au moins (i) un élastomère diénique, (ii) une charge inorganique renforçante, (iii) un agent de couplage assurant la liaison entre la charge renforçante et l'élastomère, caractérisée en ce que ladite charge inorganique comprend un aluminosilicate de synthèse synthétique (ci-après dénommé "aluminosilicate renforçant") répondant à la formule :

$$\text{(I)} \qquad M_x\, Si\, Al_y\, O_a\, (OH)_b,\, (H_2O)_c$$

avec :

- M cation choisi dans le groupe constitué par $K^+$, $Na^+$, $Ca^{++}$ et les mélanges de ces cations ;
- $x>0; y>0; a\geq0; b\geq0, c\geq0$ et $a+b>0$;

et possédant les caractéristiques suivantes :

(a) une surface spécifique BET comprise entre 20 et 300 $m^2/g$ ;
(b) une taille moyenne en masse de particules (notée $d_w$) comprise entre 20 et 400 nm ;
(c) une vitesse de désagglomération aux ultrasons (notée $\alpha$) supérieure à $5.10^{-4}$ $\mu m^{-1}$/min.

L'invention a également pour objet un procédé d'obtention d'une composition de caoutchouc à cinétique de vulcanisation améliorée, utilisable pour la fabrication de pneumatiques, dans lequel on incorpore à au moins un élastomère diénique, au moins une charge inorganique renforçante et un agent de couplage assurant la liaison entre la charge inorganique renforçante et l'élastomère, ce procédé étant caractérisé en ce que ladite charge inorganique comporte un aluminosilicate renforçant (i.e., ayant toutes les caractéristiques précitées), et en ce qu'on malaxe thermomécaniquement le tout, en une ou plusieurs étapes, jusqu'à atteindre une température maximale comprise entre 110°C et 190°C.
L'invention a également pour objet l'utilisation d'une composition conforme à l'invention pour la fabrication d'articles finis ou produits semi-finis, ainsi que ces articles finis et produits semi-finis eux-mêmes, comportant une composition de caoutchouc conforme à l'invention, ces articles ou produits étant destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.
L'invention a tout particulièrement pour objet l'utilisation d'une composition de caoutchouc conforme à l'invention pour la fabrication de pneumatiques ou de produits semi-finis en caoutchouc destinés à ces pneumatiques, ces produits semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.
La composition conforme à l'invention est particulièrement adaptée à la fabrication de bandes de roulement de pneumatiques destinés à équiper des véhicules de tourisme, camionnettes, véhicules 4x4 (à 4 roues motrices), deux roues, "Poids-lourds" (c'est-à-dire métro, bus, engins de transport routier (camions, tracteurs, remorques), véhicules hors-la-route), avions, engins de génie civil, agraire, ou de manutention, ces bandes de roulement pouvant être utilisées lors de la fabrication de pneumatiques neufs ou pour le rechapage de pneumatiques usagés.
Des temps de cuisson réduits sont notamment avantageux pour les bandes de roulement destinées au rechapage, qu'il s'agisse de rechapage "à froid' (utilisation d'une bande de roulement précuite) ou de rechapage "à chaud" conventionnel (utilisation d'une bande de roulement à l'état cru). Dans ce dernier cas, une durée de cuisson réduite, outre le fait qu'elle diminue les coûts de production, limite la surcuisson (ou post-cuisson) imposée au reste de l'enveloppe (carcasse) du pneumatique usagé (déjà vulcanisé).
L'invention a également pour objet ces pneumatiques et ces produits semi-finis en caoutchouc eux-mêmes, notamment ces bandes de roulement, lorsqu'ils comportent une composition de caoutchouc conforme à l'invention.
L'invention a également pour objet l'utilisation à titre de charge renforçante, dans une composition de caoutchouc diénique, d'un aluminosilicate renforçant tel que défini ci-dessus.
L'invention ainsi que ses avantages seront aisément compris à la lumière de la description et des exemples de réalisation qui suivent, ainsi que des figures relatives à ces exemples qui représentent des courbes de variation de module en fonction de l'allongement pour différentes compositions de caoutchouc diénique, conformes ou non à l'invention.

## I. MESURES ET TESTS UTILISES

I-1. Caractérisation des charges renforçantes

Les charges décrites ci-après consistent de manière connue en des agglomérats de particules, susceptibles de se désagglomérer en ces particules sous l'effet d'une force externe, par exemple sous l'action d'un travail mécanique ou d'ultrasons. Le terme "particule" utilisé dans la présente demande doit être compris dans son sens générique habituel d'agrégat (encore appelé "particule secondaire"), et non dans celui de particule élémentaire (encore appelé "particule primaire") pouvant former, le cas échéant, une partie de cet agrégat ; par "agrégat", il faut entendre de manière connue l'ensemble insécable (i.e., qui ne peut être coupé, divisé, partagé) qui est produit lors de la synthèse de la charge, en général formé de particules élémentaires (primaires) agrégées entre elles.
Ces charges sont caractérisées comme indiqué ci-après.

a) surface spécifique BET:

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage: 1heure à 160°C - domaine de pression relative *p/po :* 0.05 à 0.17].

b) taille moyenne des particules $d_w$:

La taille moyenne (en masse) des particules, notée $d_w$, est mesurée de manière connue après dispersion aux

ultrasons de la charge à analyser. La mesure est réalisée au moyen d'un sédimentomètre centrifuge à détection rayons X type "XDC" ("X-Ray Disk Centrifuge"), commercialisé par la société Brookhaven Instruments.

Le mode opératoire est le suivant. On réalise une suspension de 3,2 g d'échantillon de charge à analyser dans 40 ml d'eau, par action durant 8 minutes, à 60% de puissance (60% de la position maxi du *"output control"*), d'une sonde ultrasons de 1500 W (sonificateur Vibracell 3/4 pouce commercialisé par la société Bioblock sous la référence M75450). Pour limiter l'échauffement pendant la sonification, la suspension est placée de préférence dans un bain d'eau froide (par exemple à une température de 5 à 10°C). Après sonification, on introduit 15 ml de la suspension dans le disque en rotation ; après sédimentation pendant 120 minutes. La distribution en masse des tailles de particules est calculée par le logiciel du sédimentomètre "XDC" ; la moyenne géométrique en masse des tailles de particules ("geometric mean (Xg)" selon l'appellation du logiciel), notée ici $d_w$, est calculée par le logiciel à partir de l'équation suivante :

$$\log d_w = \frac{\sum_{i=1}^{n} m_i \log d_i}{\sum_{i=1}^{n} m_i}$$

avec $m_i$ masse de l'ensemble des objets dans la classe de diamètre $d_i$. Pour des particules (non conformes à l'invention) dont la taille $d_w$ est très élevée (au delà de 1 µm), les mesures sont réalisées en "gravitationnel", c'est-à-dire que la vitesse de rotation du disque est nulle.

c) vitesse de désagglomération $\alpha$:

La vitesse de désagglomération (notée $\alpha$) est mesurée au test dit "test de désagglomération aux ultrasons", à 100% de puissance d'une sonde de 600 W (watts), fonctionnant ici en mode pulsé (soit : 1 seconde ON, 1 seconde OFF) afin d'éviter un échauffement excessif de la sonde ultrasons durant la mesure. Ce test connu, faisant notamment l'objet de la demande de brevet WO99/28376 (voir également WO99/28380, WO00/73372, WO00/73373), permet de mesurer en continu l'évolution de la taille moyenne (en volume) des agglomérats de particules durant une sonification, selon les indications ci-après.

Le montage utilisé est constitué d'un granulomètre laser (type "Mastersizer S", commercialisé par Malvern Instruments - source laser He-Ne émettant dans le rouge, longueur d'onde 632,8 nm) et de son préparateur ("Malvern Small Sample Unit MSX1 "), entre lesquels a été intercalée une cellule de traitement en flux continu (Bioblock M72410) munie d'une sonde ultrasons (Sonificateur 1/2 pouce type Vibracell de 600 W commercialisé par la société Bioblock).

Une faible quantité (120 mg) de charge à analyser est introduite dans le préparateur avec 160 ml d'eau, la vitesse de circulation étant fixée à son maximum. Au moins trois mesures consécutives sont réalisées pour déterminer selon la méthode de calcul connue de Fraunhofer (matrice de calcul Malvem 3$$D) le diamètre initial moyen (en volume) des agglomérats, noté $d_v[0]$. La sonification (mode pulsé : 1 s ON, 1 s OFF) est ensuite établie à une puissance de 100% (soit 100% de la position maxi du "tip amplitude") et on suit durant 8 minutes l'évolution du diamètre moyen en volume $d_v[t]$ en fonction du temps "t" à raison d'une mesure toutes les 10 secondes. Après une période d'induction (3-4 minutes), il est observé que l'inverse du diamètre moyen en volume $1/d_v[t]$ varie linéairement, ou de manière sensiblement linéaire, avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération (en général, entre 4 et 8 minutes). Elle est exprimée en $\mu m^{-1}$/min.

La demande WO99/28376 précitée décrit en détail un dispositif de mesure utilisable pour la réalisation de ce test de désagglomération aux ultrasons. Ce dispositif, on le rappelle, consiste en un circuit fermé dans lequel peut circuler un flux d'agglomérats de particules en suspension dans un liquide. Ce dispositif comporte essentiellement un préparateur d'échantillon, un granulomètre laser et une cellule de traitement. Une mise à la pression atmosphérique, au niveau du préparateur d'échantillon et de la cellule de traitement elle-même, permet l'élimination en continu des bulles d'air qui se forment durant la sonification (action de la sonde ultrasons).

Le préparateur d'échantillon ("Malvem Small Sample Unit MSX1") est destiné à recevoir l'échantillon de silice à tester (en suspension dans le liquide 3) et à le faire circuler à travers le circuit à la vitesse préréglée (potentiomètre - vitesse maximum 3 l/min), sous la forme d'un flux de suspension liquide. Ce préparateur consiste simplement en une cuve de réception qui contient, et à travers laquelle circule, la suspension à analyser. Il est équipé d'un moteur d'agitation, à vitesse modulable, afin d'éviter une sédimentation des agglomérats de particules de la suspension ; une mini-pompe centrifuge est destinée à assurer la circulation de la suspension dans le circuit ; l'entrée du préparateur est reliée à l'air libre via une ouverture destinée à recevoir l'échantillon de charge à tester et/ou le liquide utilisé pour la suspension.

Au préparateur est connecté un granulomètre laser ("Mastersizer S") dont la fonction est de mesurer en continu, à intervalles de temps réguliers, la taille moyenne en volume "$d_v$" des agglomérats, au passage du flux, grâce à une cellule de mesure à laquelle sont couplés les moyens d'enregistrement et de calcul automatiques du granulomètre. On rappelle ici brièvement que les granulomètres laser exploitent, de manière connue, le principe de la diffraction de la lumière par des objets solides mis en suspension dans un milieu dont l'indice de réfraction est différent de celui du solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, $d_v$ correspondant à la taille moyenne en volume de cette distribution ($d_v = \Sigma(n_i\, d_i^4) / \Sigma(n_i\, d_i^3)$ avec $n_i$ nombre d'objets de la classe de taille ou diamètre $d_i$).

Intercalée entre le préparateur et le granulomètre laser se trouve enfin une cellule de traitement équipée d'une sonde ultrasons, pouvant fonctionner en mode continu ou pulsé, destinée à casser en continu les agglomérats de particules au passage du flux. Ce flux est thermostaté par l'intermédiaire d'un circuit de refroidissement disposé, au niveau de la cellule, dans une double enveloppe entourant la sonde, la température étant contrôlée par exemple par une sonde de température plongeant dans le liquide au niveau du préparateur.

d) Analyse RMN :

Pour l'analyse des déplacements chimiques par RMN du silicium, dans un environnement aluminosilicate, on se reportera par exemple à la publication « Structural Studies of Silicates by Solid-State High Resolution 29Si NMR », E. Lippmaa et al., J. Am. Chem. Soc., 1980, 102, 4889-4893.

Les spectres RMN sont obtenus de manière connue, sur un spectromètre BRUKER ASX 200 MHz, équipé d'un aimant supraconducteur de 4,7 Teslas (fréquence de Larmor du silicium = 39.76 MHz). Pour acquérir le signal, les échantillons sous forme de poudre sont placés dans un porte-échantillon cylindrique en oxyde de zirconium (rotor) de 0,3 $cm^3$, qui tourne à l'angle magique à une fréquence de 4 KHz. Pendant l'observation du signal, le découplage haute puissance est employé pour moyenner les interactions dipolaires protons-silicium ; le nombre de "scans" est compris entre 10 et 15 milles, afin d'augmenter la sensibilité de la mesure.

I-2. Caractérisation des compositions de caoutchouc

Les compositions de caoutchouc sont caractérisées, avant et après cuisson, comme indiqué ci-après.

a) essais de traction:

Ces essais permettent de déterminer les contraintes d'élasticité et les propriétés à la rupture. Sauf indication différente, ils sont effectués conformément à la norme française NF T 46-002 de septembre 1988. On mesure soit en première élongation (i.e., sans cycle d'accommodation - les modules sont alors notés "M") soit en troisième élongation (i.e., après deux cycles d'accommodation - les modules sont alors notés "E") les modules sécants vrais (i.e., calculés en se ramenant à la section réelle de l'éprouvette), exprimés en MPa, à 10% d'allongement (modules notés donc, respectivement, M10 et E10), à 100% d'allongement (modules notés respectivement M100 et E100), et à 250% ou 300% d'allongement (modules notés respectivement, selon les cas, M250 ou M300 et E250 ou E300).

On peut mesurer également les contraintes à la rupture (en MPa) et les allongements à la rupture (en %). Toutes ces mesures de traction sont effectuées dans les conditions normales de température et d'hygrométrie (23±2°C ; 50±5% d'humidité relative - norme française NF T 40-101 de décembre 1979).

Un traitement des enregistrements de traction permet également de tracer la courbe de module en fonction de l'allongement (voir figures 1 et 2 annexées), le module utilisé ici étant le module sécant vrai mesuré en première élongation (module noté "M").

b) propriétés dynamiques:

Les propriétés dynamiques sont mesurées sur un viscoanalyseur (Metravib VA4000), selon la norme ASTM D5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour); pour le cycle retour, on enregistre la valeur maximale du facteur de perte, notée $\tan(\delta)_{max}$.

c) test de "bound rubber":

Le test dit de "bound rubber" permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, liée à la charge renforçante au cours du mélangeage, donne une indication quantitative de l'activité renforçante de la charge dans la composition de caoutchouc. Une telle méthode a été décrite par exemple dans la norme française NF T 45-114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: Plastics, Rubber and Composites Processing and Applications, Vol. 25, No7, p. 327 (1996) ; Rubber Chemistry and Technology, Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 $cm^3$ de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (20°C) et à l'abri de la lumière, et le solvant (toluène) est changé une fois, par exemple après les cinq premiers jours de gonflement. Le taux de "bound rubber" (% en poids) est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

d) rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983). $T_\alpha$ (par exemple $T_{99}$) est le temps nécessaire pour atteindre une conversion de $\alpha$%, c'est-à-dire $\alpha$% (par exemple 99%) de l'écart entre couple minimum et couple maximum. On mesure également la constante de vitesse de conversion K (en $min^{-1}$) d'ordre 1, calculée entre 30% et 80% de conversion, qui permet d'apprécier la cinétique de vulcanisation (plus K est élevée, plus la cinétique est rapide).

**II. CONDITIONS DE REALISATION DE L'INVENTION**

Les compositions de caoutchouc selon l'invention sont à base des constituants suivants : (i) un (au moins un) élastomère diénique, (ii) une (au moins une) charge inorganique renforçante et (iii) un (au moins un) agent de couplage assurant la liaison entre cette charge et cet élastomère diénique, ladite charge inorganique comprenant un aluminosilicate renforçant tel que décrit en détail ci-après.

Bien entendu, par l'expression "composition à base de", il faut entendre une composition comportant le mélange et/ou le produit de réaction *in situ* des différents constituants de base utilisés, certains de ces constituants pouvant réagir et/ou étant destinés à réagir entre eux, au moins partiellement, lors des différentes phases de fabrication de la composition, ou lors de sa cuisson ultérieure.

Dans la présente description, sauf indication expresse différente, tous les pourcentages (%) indiqués sont des % en masse.

II-1. Elastomère diénique

Par élastomère ou caoutchouc "diénique", on entend de manière connue un élastomère issu au moins en partie (i.e. un homopolymère ou un copolymère) de monomères diènes, c'est-à-dire de monomères porteurs de deux doubles liaisons carbone-carbone, conjuguées ou non.

Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15% (% en moles)).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50% (% en moles).

Ces définitions étant données, on entend en particulier par élastomère diénique susceptible d'être utilisé dans les compositions conformes à l'invention:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - tout copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;
(d) - tout copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, lé vinylnaphtalène.

Les copolymères peuvent contenir entre 99% et 20% en poids d'unités diéniques et de 1% à 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon norme ASTM D3418-82) entre -40°C et -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode préférentiel de réalisation de l'invention, l'élastomère diénique de la composition conforme à l'invention est choisi dans le groupe des élastomères diéniques fortement insaturés constitué par les polybutadiènes (BR), les polyisoprènes de synthèse (IR), le caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR), et les mélanges de ces élastomères.

La composition conforme à l'invention est notamment destinée à une bande de roulement pour pneumatique, qu'il s'agisse d'un pneumatique neuf ou usagé (cas d'un rechapage).

Lorsque une telle bande de roulement est destinée par exemple à un pneumatique tourisme, l'élastomère diénique est de préférence un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur

en liaisons trans-1,4 comprise entre 15% et 75% et une Tg comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4. Lorsque la bande de roulement est destinée à un pneumatique utilitaire tel que Poids-lourd, l'élastomère diénique est de préférence un élastomère isoprénique. On entend par "élastomère isoprénique", de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Bien entendu, l'élastomère diénique peut être aussi constitué, en partie, d'un autre élastomère fortement insaturé tel que, par exemple, un élastomère SBR.

Selon un autre mode de réalisation avantageux de l'invention, notamment lorsqu'elle est destinée à un flanc de pneumatique, la composition conforme à l'invention peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

<u>II-2. Charge inorganique renforçante</u>

Dans la présente demande, on entend de manière connue par "charge inorganique renforçante", une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

L'aluminosilicate de synthèse utilisé à titre de charge inorganique renforçante peut constituer la totalité ou une partie seulement de la charge renforçante totale, dans ce dernier cas associé par exemple à une autre charge inorganique renforçante telle qu'une silice HDS, ou à du noir de carbone conventionnel.

De préférence, l'aluminosilicate renforçant constitue la majorité, c'est-à-dire plus de 50% en poids de la charge renforçante totale (i.e., de la charge renforçante inorganique totale en l'absence de noir de carbone). Avantageusement, l'aluminosilicate renforçant peut constituer la totalité de la charge (inorganique) renforçante.

Ceci étant précisé, la composition conforme à l'invention utilise, à titre de charge inorganique renforçante, un aluminosilicate de synthèse, dit "aluminosilicate renforçant", répondant à la formule (I) qui suit :

$$\text{(I)} \qquad M_x\ Si\ Al_y\ O_a\ (OH)_b,\ (H_2O)_c$$

avec:

- M cation choisi dans le groupe constitué par $K^+$, $Na^+$, $Ca^{++}$ et les mélanges de ces cations ;
- $x>0; y>0; a\geq 0; b\geq 0, c\geq 0$ et $a+b>0$;

et possédant les caractéristiques suivantes :

(a) une surface spécifique BET comprise entre 20 et 300 $m^2/g$ ;
(b) une taille moyenne en masse de particules (notée $d_w$) comprise entre 20 et 400 nm ;
(c) une vitesse de désagglomération aux ultrasons (notée $\alpha$) supérieure à $5.10^{-4}$ $\mu m^{-1}/min$.

Par aluminosilicate, on entend tout composé répondant, aux impuretés près, à la formule (I) ci-dessus, quelle que soit sa forme, cristalline ou amorphe.

Un aluminosilicate de synthèse ne doit pas être confondu avec des oxydes de silicium tels que de la silice ($SiO_2$) ni avec des oxydes d'aluminium tels que des alumines ou des oxyde-hydroxydes d'aluminium, comme décrits par exemple dans les demandes EP-A-0501227, EP-A-0735088, EP-A-0810258, WO99/28376 précitées.

Tout d'abord, un aluminosilicate de synthèse se caractérise par la présence simultanée, dans une même

particule, des éléments Al et Si, ce qui n'est pas le cas des silices ou alumines, ni des mélanges d'alumines et de silices. Au microscope électronique à transmission, par exemple, seront toujours visibles des atomes de silicium et d'aluminium dans un même agrégat d'aluminosilicate, ce qui n'est pas le cas pour les silices, alumines ou mélanges de ces deux types de charge.

Un aluminosilicate de synthèse, obtenu de manière connue par co-précipitation de silicium et d'aluminium, est en outre caractérisé par la présence généralisée, dans sa structure, de liaisons Al-O-Si. Cette structure est facilement identifiable par analyse RMN (voir paragraphe I-1.d précédent) qui le distingue par exemple aisément d'une silice SiO2 qui serait simplement dopée avec de l'aluminium (EP-A-0 735 088 précitée).

L'analyse RMN sur un tel aluminosilicate montre que pour la majorité des atomes de Si, il existe au moins un atome de Al relié à ces atomes de Si par l'intermédiaire d'une liaison Al-O-Si. Les aluminosilicates renforçants synthétisés dans les exemples de réalisation qui suivent se caractérisent en général par un nombre de liaisons Al-O-Si compris dans un domaine de 1 à 4, pour un atome de Si donné.

Le cation M utilisé est de préférence $Na^+$ : on a constaté qu'un tel cation était synonyme d'une vitesse de désagglomération supérieure.

La surface spécifique BET de l'aluminosilicate renforçant est comprise entre 20 et 300 $m^2/g$ soit entre 40 et 200 $m^2/cm^3$, plus précisément entre 42 et 1191 $m^2/cm^3$ pour une plage de densité variant entre 2,10 $g/cm^3$ (densité de la silice $SiO_2$) et 3,97 $g/cm^3$ (densité de l'alumine $Al_2O_3$).

Pour une surface BET inférieure à 20 $m^2/g$ (soit 40 $m^2/cm^3$ pour la densité minimale considérée supra), les compositions présentent certes une aptitude à la mise en oeuvre à l'état cru ("processabilité") facilitée et une hystérèse réduite, mais on observe une déchéance des propriétés de renforcement et une résistance à l'usure, en pneumatique, qui diminue ; pour des surfaces BET supérieures à 300 $m^2/g$ (soit 1200 $m^2/cm^3$ pour la densité maximale indiquée supra), la processabilité à l'état cru est réduite (plasticité Mooney plus élevée) et la dispersion de la charge s'en trouve dégradée. Pour des tailles $d_w$ trop élevées, supérieures à 400 nm, les particules se comportent comme des défauts qui localisent les contraintes et sont préjudiciables à l'usure ; des tailles $d_w$ trop petites, inférieures à 20 nm, vont par contre pénaliser la processabilité à l'état cru et la dispersion de la charge au cours de cette mise en oeuvre.

Pour toutes les raisons exposées ci-avant, la surface BET est de préférence comprise entre 40 et 250 $m^2/g$ (soit entre 85 et 1000 $m^2/cm^3$ pour la plage de densité indiquée supra) et la taille de particules $d_w$ est de préférence comprise entre 50 et 300 nm.

La dispersibilité intrinsèque d'une charge peut être évaluée à l'aide du test de désagglomération aux ultrasons décrit au chapitre I précédent, par mesure de la vitesse de désagglomération de cette charge. De préférence, l'aluminosilicate renforçant présente une vitesse $\alpha$ qui est supérieure à $1.10^{-3}$ $\mu m^{-1}/min$ (mesurée au test de désagglomération à 100% de puissance d'une sonde ultrasons de 600 W). Une telle caractéristique garantit pour ce type de produit une très bonne aptitude, d'une part à s'incorporer dans la matrice lors du mélangeage avec l'élastomère, d'autre part à se désagglomérer afin de se disperser, sous une forme finement divisée, de façon homogène dans la matrice caoutchouteuse. Pour une telle vitesse $\alpha$ supérieure à $1.10^{-3}$ $\mu m^{-1}/min$, on constaté que peu d'agglomérats microniques sont observés par réflexion en microscopie optique sur une coupe de composition caoutchouteuse préparée selon les règles de l'art.

De manière plus préférentielle, notamment lorsque les compositions de l'invention sont destinées à des bandes de roulement de pneumatiques présentant une faible résistance au roulement et une résistance élevée à l'usure, les aluminosilicates renforçants utilisés vérifient au moins l'une des caractéristiques suivantes, de préférence les deux :

- une surface BET comprise entre 60 et 200 $m^2/g$ ; (soit entre 120 et 800 $m^2/cm^3$ pour la plage de densité indiquée supra) ;
- une taille de particules $d_w$ comprise entre 100 et 200 nm.

Par ailleurs, pour une dispersibilité encore meilleure de l'aluminosilicate renforçant dans la matrice de caoutchouc diénique, et donc pour un renforcement optimal, on préfère que sa vitesse de désagglomération $\alpha$ soit supérieure à $2.10^{-3}$ $\mu m^{-1}/min$.

Les particules d'aluminosilicate renforçant présentent en outre une haute réactivité de surface, c'est-à-dire un taux élevé de fonctions hydroxyle de surface (-OH) réactives vis-à-vis de l'agent de couplage, ce qui est particulièrement favorable à la fonction de renforcement remplie par la charge, et donc aux propriétés mécaniques des compositions de caoutchouc de l'invention.

De préférence, dans la formule (I) précédente, on a par ailleurs au moins l'une, de préférence l'ensemble des caractéristiques suivantes qui est vérifié(e) :

- x compris dans un domaine de 0,01 à 2 ;
- y compris dans un domaine de 0,1 à 5 ;
- a compris dans un domaine de 0 à 5 ;

- b compris dans un domaine de 0 à 3 ;
- c compris dans un domaine de 0 à 5.

Plus préférentiellement encore, on a au moins l'une, de préférence l'ensemble des caractéristiques suivantes qui est vérifié(e) :

- x compris dans un domaine de 0,05 à 1 ;
- y compris dans un domaine de 0,4 à 0,8 ;
- a compris dans un domaine de 2 à 4 ;
- b compris dans un domaine de 0 à 1 ;
- c compris dans un domaine de 0 à 1.

L'état physique sous lequel peut se présenter l'aluminosilicate renforçant est indifférent, que ce soit sous forme de poudre, de microperles, de granulés, de pellets, de billes ou toute autre forme densifiée, à la condition bien évidemment que le mode de densification n'altère pas les caractéristiques essentielles ou préférentielles préconisées pour cette charge.

L'aluminosilicate renforçant décrit ci-dessus peut être utilisé seul ou associé à une autre charge inorganique renforçante, par exemple à une silice, notamment du type HDS. Comme exemples non limitatifs de silices utilisables, on peut citer les silices Ultrasil 7000 et Ultrasil 7005 de la société Degussa, les silices Zeosil 1165MP, 1135MP et 1115M de la société Rhodia, la silice Hi-Sil EZ150G de la société PPG, les silices Zeopol 8715, 8745 et 8755 de la Société Huber. Si une alumine renforçante est utilisée, il s'agit préférentiellement d'une alumine hautement dispersible telle que décrite dans la demande EP-A-0810258 précitée, par exemple des alumines "Baikalox" "A125" ou "CR125" (société Baïkowski), "APA-100RDX" (société Condea), "Aluminoxid C" (société Degussa) ou "AKP-G015" (Sumitomo Chemicals).

L'aluminosilicate renforçant, seul ou éventuellement associé à une autre charge inorganique renforçante, peut également être utilisé en coupage, i.e., en mélange, avec un ou plusieurs noirs de carbone conventionnels de grade pneumatique. Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N330, N339, N347, N375.

La quantité de noir de carbone présente dans la charge renforçante totale peut varier dans de larges limites, elle est de préférence inférieure à celle d'aluminosilicate renforçant. Dans les compositions de l'invention, on utilise avantageusement, en association avec l'aluminosilicate renforçant, un noir de carbone en faible proportion, à un taux préférentiel compris entre 2 et 20 pce, plus préférentiellement compris dans un domaine de 5 à 15 pce (parties en poids pour cent parties d'élastomère). Dans les intervalles indiqués, on bénéficie des propriétés colorantes (agent de pigmentation noire) et anti-UV des noirs de carbone, sans pénaliser par ailleurs les performances typiques apportées par la charge inorganique.

De manière préférentielle, le taux de charge renforçante totale dans les compositions de l'invention est compris dans un domaine allant de 20 à 400 pce, plus préférentiellement de 30 à 200 pce en ce qui concerne aussi le taux de charge inorganique. L'optimum est en effet différent selon les applications visées : de manière connue, le niveau de renforcement attendu sur un pneumatique vélo, par exemple, est nettement inférieur à celui exigé sur un pneumatique pour véhicule de tourisme ou pour véhicule utilitaire tel que Poids-lourd. Lorsque les compositions de l'invention sont destinées à des bandes de roulement de pneumatiques, le taux de charge inorganique renforçante, donc d'aluminosilicate renforçant lorsque ce dernier constitue la totalité de cette charge inorganique renforçante, est choisi de préférence supérieur à 50 pce, par exemple compris entre 50 et 150 pce.

II-3. Agent de couplage

Il est bien connu de l'homme du métier qu'il est nécessaire d'utiliser, dans le cas d'une charge inorganique renforçante, un agent de couplage encore appelé agent de liaison qui a pour fonction d'assurer la liaison ou "couplage" entre la charge inorganique et l'élastomère, tout en facilitant la dispersion de cette charge inorganique au sein de la matrice élastomérique.

L'aluminosilicate renforçant décrit précédemment nécessite lui aussi l'emploi d'un tel agent de couplage pour assurer sa fonction de charge renforçante dans les compositions de caoutchouc conformes à l'invention.

Par agent de couplage, on entend plus précisément un agent apte à établir une connexion suffisante, de nature chimique et/ou physique, entre la charge considérée et l'élastomère ; un tel agent de couplage, au moins bifonctionnel, a par exemple comme formule générale simplifiée " Y-T-X ", dans laquelle :

- Y représente un groupe fonctionnel (fonction "Y") qui est capable de se lier physiquement et/ou chimiquement à la charge inorganique, une telle liaison pouvant être établie, par exemple, entre un atome de silicium de l'agent de

couplage et les groupes hydroxyle (OH) de surface de la charge inorganique ;

- X représente un groupe fonctionnel (fonction "X") capable de se lier physiquement et/ou chimiquement à l'élastomère, par exemple par l'intermédiaire d'un atome de soufre ;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage susceptible d'assurer efficacement la liaison ou couplage entre une charge inorganique renforçante telle que silice et un élastomère diénique, comme par exemple un organosilane, notamment un alkoxysilane sulfuré, ou encore un polyorganosiloxane au moins bifonctionnel (porteur des fonctions X et Y précitées).

Des agents de couplage silice/élastomère, notamment, ont été décrits dans un grand nombre de documents, les plus connus étant des alkoxysilanes bifonctionnels tels que des alkoxysilanes sulfurés.

On utilise en particulier des alkoxysilanes sulfurés, dits "symétriques" ou "asymétriques" selon leur structure particulière, tels que décrits par exemple dans les demandes de brevet ou brevets US-A-3 842 111, US-A-3 873 489, US-A-3 978 103, US-A-3 997 581, US-A-4 002 594, US-A-4 072 701, US-A-4 129 585, ou dans les documents plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357, WO 02/083782 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

(I) $Z - A - S_n - A - Z$,

dans laquelle:

- n est un entier de 2 à 8 (de préférence de 2 à 5);
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$ en particulier le propylène);
- Z répond à l'une des formules ci-après:

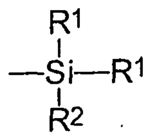 ; 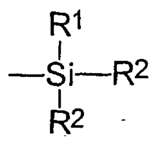 ; 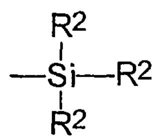 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).

- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence des groupes alkoxyle en $C_1$-$C_8$ ou cycloalkoxyle en $C_5$-$C_8$, plus préférentiellement des groupes alkoxyle en $C_1$-$C_4$, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silylalkyl($C_1$-$C_4$)), comme par exemple les polysulfures de bis(3-triméthoxysilylpropyl) ou de bis(3-triéthoxysilylpropyl) tels que le tétrasulfure de bis(3-tri-éthoxysilylpropyl), en abrégé TESPT, de formule $[(C_2H_5O)_3Si(CH_2)_3S_2]_2$ ou le disulfure de bis-(triéthoxysilylpropyle), en abrégé TESPD,

de formule $[(C_2H_5O)_3Si(CH_2)_3S]_2$.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

On citera également comme agent de couplage avantageux les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande WO 02/083782 précitée.

A titre d'exemples d'agents de couplage autres que les alkoxysilanes polysulfurés précités, on citera notamment des polyorganosiloxanes bifonctionnels tels que décrits par exemple dans les demandes WO 99/02602 ou WO 01/96442 précitées, ou encore les polysulfures d'hydroxysilane tels que décrits dans les demandes WO 02/30939 et WO 02/31041 précitées.

L'homme du métier saura ajuster la teneur en agent de couplage dans les compositions de l'invention, en fonction de l'application visée, de la nature de l'élastomère utilisé et de la quantité d'aluminosilicate renforçant, complété le cas échéant de toute autre charge inorganique employée à titre de charge renforçante complémentaire.

De manière à tenir compte des différences de surface spécifique et de densité des aluminosilicates renforçants (et, le cas échéant, d'éventuelles autres charges inorganiques renforçantes associées) susceptibles d'être utilisés, ainsi que des masses molaires des agents de couplage, il est préférable de déterminer le taux optimal d'agent de couplage en moles par mètre carré de charge inorganique renforçante, pour chaque charge inorganique renforçante (aluminosilicate renforçant plus, le cas échéant, charge inorganique complémentaire associée) utilisée ; ce taux optimal est calculé à partir du rapport pondéral [agent de couplage/charge inorganique-renforçante], de la surface BET de la charge et de la masse molaire de l'agent de couplage (notée M ci-après), selon la relation connue suivante:

$$\text{(moles/m}^2\text{ charge inorganique)} = \text{[agent de couplage/charge inorganique] (1/BET)} \ (1/M)$$

Préférentiellement, la quantité d'agent de couplage utilisée dans les compositions conformes à l'invention est comprise entre $10^{-7}$ et $10^{-5}$ moles par $m^2$ de charge inorganique renforçante, soit par $m^2$ d'aluminosilicate renforçant lorsque ce dernier est utilisé sans autre charge inorganique renforçante associée. Plus préférentiellement encore, la quantité d'agent de couplage est comprise entre $5.10^{-7}$ et $5.10^{-6}$ moles par $m^2$ de charge inorganique totale (aluminosilicate renforçant plus, le cas échéant, charge inorganique complémentaire associée).

Compte tenu des quantités exprimées ci-dessus, le taux d'agent de couplage, ramené au poids d'élastomère diénique, est de préférence compris entre 0,1 et 15 pce, plus préférentiellement compris entre 0,5 et 10 pce.

L'agent de couplage utilisé pourrait être préalablement greffé (via la fonction "X") sur l'élastomère diénique de la composition de l'invention, l'élastomère ainsi fonctionnalisé ou "précouplé" comportant alors la fonction "Y" libre pour l'aluminosilicate renforçant. L'agent de couplage pourrait également être préalablement greffé (via la fonction "Y") sur l'aluminosilicate renforçant, la charge ainsi "précouplée" pouvant ensuite être liée à l'élastomère diénique par l'intermédiaire des fonctions libres "X". On préfère toutefois utiliser l'agent de couplage à l'état libre (i.e., non greffé) ou greffé sur l'aluminosilicate renforçant, notamment pour des raisons de meilleure processabilité des compositions à l'état cru.

<u>II-4. Additifs divers</u>

Bien entendu, les compositions conformes à l'invention contiennent, outre les composés déjà décrits, tout ou partie des additifs habituellement utilisés dans les compositions de caoutchouc diénique destinées à la fabrication de pneumatiques, comme par exemple des huiles d'extension, des plastifiants, des pigments, des agents de protection du type antioxydants, antiozonants, des agents anti-fatigue, des activateurs de couplage tels que décrits par exemple dans les demandes WO 00/05300, WO 00/05301, WO 01/55252, WO 01/55253, des accepteurs et donneurs de méthylène, bismaléimides ou autres résines renforçantes tels que décrits par exemple dans WO 02/10269, un système de réticulation à base soit de soufre, soit de donneurs de soufre et/ou de peroxyde, des accélérateurs de vulcanisation, des activateurs de vulcanisation, des systèmes promoteurs d'adhésion du caoutchouc au métal ou au textile. A la charge inorganique renforçante peut être également associée, si besoin est, une charge blanche conventionnelle non renforçante, comme par exemple des argiles, la bentonite, le talc, la craie, le kaolin, en particulier dans des compositions de caoutchouc destinées à des pneumatiques couleur (voir par exemple demande WO99/02590 précitée).

Les compositions de caoutchouc conformes à l'invention peuvent également contenir, en complément des agents de couplage précités, des agents de recouvrement (comportant par exemple la seule fonction Y) de la charge

inorganique renforçante ou plus généralement des agents d'aide à la mise en oeuvre susceptibles de manière connue, grâce à une amélioration de la dispersion de la charge inorganique renforçante dans la matrice de caoutchouc et à un abaissement de la viscosité des compositions, d'améliorer leur processabilité à l'état cru, ces agents, utilisés par exemple à un taux préférentiel compris entre 0,5 et 3 pce, étant par exemple des alkylalkoxysilanes (notamment des alkyltriéthoxysilanes comme par exemple le 1-octyl-triéthoxysilane commercialisé par la société Degussa-Hüls sous la dénomination Dynasylan Octeo ou le 1-hexa-décyl-triéthoxysilane commercialisé par la société Degussa-Hüls sous la dénomination Si216), des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

II-5. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée $T_{max}$) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation ; de telles phases ont été décrites par exemple dans les nombreuses demandes précitées (par exemple WO 00/05300, WO 00/05301, WO 01/55252, WO 01/55253, WO 02/30939, WO 02/31041, WO 02/083782).

Le procédé de fabrication selon l'invention est caractérisé en ce qu'au moins la charge renforçante et l'agent de couplage sont incorporés par malaxage à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermique complémentaire, notamment pour améliorer encore la dispersion, dans la matrice élastomérique, de la charge renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Le système de vulcanisation proprement dit est préférentiellement à base de soufre et d'un accélérateur primaire de vulcanisation, en particulier d'un accélérateur du type sulfénamide. A ce système de vulcanisation de base viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine). Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Les compositions conformes à l'invention peuvent être utilisées seules ou en coupage (i.e., en mélange) avec

toute autre composition de caoutchouc utilisable pour la fabrication de pneumatiques.

## III. EXEMPLES DE REALISATION DE L'INVENTION

III-1. Charges utilisées

Les caractéristiques des aluminosilicates utilisés dans les exemples qui suivent sont résumées dans le tableau 1.

La charge A est un aluminosilicate conventionnel (i.e., non renforçant), caractérisé notamment par une surface BET et une taille de particules $d_w$ trop élevées. Les charge B, C, D et E sont des aluminosilicates renforçants, utilisables dans les compositions conformes à l'invention (caractéristiques a, b et c vérifiées), synthétisés selon les indications du paragraphe III-2 qui suit.

On note que seules les charges B et C remplissent toutes deux l'ensemble des caractéristiques préférentielles qui suivent :

- BET comprise entre 60 et 200 $m^2/g$ ;
- $d_w$ entre 100 et 200 nm;
- vitesse $\alpha$ supérieure à $2.10^{-3}$ $\mu m^{-1}/min$.

Dans tout ce qui suit, la formule des aluminosilicates a été déterminée de manière connue, par spectrométrie à émission atomique par plasma à couplage induit ("ICP") pour ce qui concerne Na, K et Al, par analyse thermogravimétrique (vitesse : 5°C/min) pour les ions hydroxyle (perte de masse entre 200 et 500°C) et l'eau (perte de masse entre 20 et 200°C), enfin par dosage spectrophotométrique (domaine visible) pour l'élément Si, après attaque de la poudre à caractériser par un milieu acide concentré (mélange de 3 ml de HCl à 33%, 1 ml de $HNO_3$ à 70% et 5 ml de HF à 40 % complétés par 91 ml d'eau distillée).

III-2. Synthèse des charges

A) Synthèse charge B :

La charge B a été synthétisée selon le mode opératoire décrit dans la publication « Acid and Alkaline Sol-Gel Synthesis of Amorphous Aluminosilicates, Dry Gel properties, and Their Use in Probing Sol Phase Reactions », B. M. De Witte and J. B. Uytterhoeven, Journal of Colloid and Interface Science 181, 200-207 (1996), comme suit.

Matériel utilisé :

- réacteur de 5 litres à double enveloppe ;
- Pompe péristaltique (Masterflex L/S) ;
- Bain thermostaté ;
- pH-mètre (Mettler - Toledo MP225) ;
- Essoreuse centrifugeuse (Rousselet - type RC30VxR) ;
- Lyophilisateur (Christ Gamma 2-20) ;
- Etuve.

Précurseurs utilisés :

- HCl à 36% (Prolabo Normapur) ;
- $Na_2SiO_3$ (Strem Chemicals - référence 93-1196) ;
- $NaAlO_2$ (Strem Chemicals - référence 93-1108).

Mode opératoire :

Dans un réacteur de 5 litres, muni d'une double enveloppe, 1440 g de solution d'HCl à 1 mol/l sont introduits. La température du milieu est régulée à 26°C par un bain thermostaté relié à la double enveloppe. L'homogénéisation

du milieu réactionnel est assurée par une pale Téflon® à six pans, couplée à un moteur tournant à une vitesse de 400 tours/min.

Deux solutions, notées sol.A et sol.B, sont ensuite préparées :

- sol.A : 117,17 g de $Na_2SiO_3$ dans 1 920 ml d'eau bidéminéralisée;
- sol.B : 39,31 g de $NaAlO_2$ dans 960 ml d'eau bidéminéralisée.

Ces deux solutions sont introduites simultanément dans le réacteur, à l'aide de deux pompes péristaltiques, avec des débits de 800 ml/min et 400 ml/min pour sol.A et sol.B, respectivement. La précipitation est instantanée. A la fin de l'introduction des deux solutions (après 2 min 25 s), le pH de la suspension est égal à 12,0 (soit au temps t = 0).

Au bout du temps t = 3min 20s, sont introduits dans le réacteur 720 g d'une solution d'HCl à 1 mol/l à l'aide d'une pompe péristaltique (débit 250 ml/min). Le pH final de la suspension dans le réacteur est alors de 3,6. La régulation thermique et l'agitation du mélange sont maintenues jusqu'au temps t = 2h 06min. La suspension est alors essorée à l'aide de l'essoreuse-centrifugeuse.

Pour la formation du gâteau, la suspension est introduite dans l'essoreuse (210 tours/min) à l'aide d'une pompe péristaltique (débit 400 ml/min). De manière à perdre le minimum de produit, la suspension obtenue après le premier passage est réintroduite deux fois dans l'essoreuse. Le pH des eaux de filtration après le troisième passage est égal à 3,6.

Pour le lavage du gâteau, la rotation de la centrifugeuse est de 210 tours/min. L'introduction des eaux de lavage se fait selon un débit de 300 ml/min. Au total, 20 litres d'eau sont utilisés pour le lavage, la dernière eau de lavage ayant un pH de 5,8. L'essorage final a lieu à 500 tours/min.

Le produit ainsi obtenu est ensuite lyophilisé dans les conditions suivantes: 48 heures de séchage principal ("main drying") à -15°C et 1030 mbar ; puis 12 heures de séchage final ("final drying") à 0°C et sous un vide dynamique. Après lyophilisation, le produit est broyé au mortier et tamisé (fraction de taille inférieure à 425 μm). Ce produit est ensuite séché à 150°C pendant 21 heures. La perte de masse est de l'ordre de 13%.

On obtient ainsi 50g de charge B, de formule :

$$Na\ 0{,}05\ Si\ Al_{0,5}O_{2,7}\ (OH)_{0,2},\ (H_2O)_{0,3}$$

L'analyse RMN$^{29}$Si pour cette charge B révèle un déplacement chimique δ égal à -110 ppm, correspondant à une structure silicium "Q4" à 1 atome d'aluminium, c'est-à-dire qu'il existe au moins une liaison Si-O-Al pour la majorité des atomes de silicium.

B) Synthèse Charges C, D et E

Les charges C, D, et E sont synthétisées de manière connue (voir EP 692 452). Matériel utilisé et précurseurs sont identiques à ceux du paragraphe précédent, à la différence près que HCl est remplacé par NaOH.

Plus précisément, les modes opératoires appliqués sont les suivants :

Charge C :

Dans le réacteur de 5 litres à double enveloppe, 2830 ml d'eau et 48,94 g de NaOH sont introduits. La température du milieu est régulée à 26°C. L'homogénéisation du milieu réactionnel est assurée par une pale Téflon® à six pans, couplée à un moteur tournant à une vitesse de 500 tours/min.

Deux solutions sol.A et sol.B sont ensuite préparées.

- sol. A : 159,46 g de $Na_2SiO_3$ dans 935 ml d'eau bidéminéralisée.
- sol. B : 26,64g de $NaAlO_2$ dans 300 ml d'eau bidéminéralisée.

A l'aide d'un entonnoir, on ajoute sol.B dans le réacteur et une agitation forte est maintenue pendant 10 min (pH = 13). A l'aide d'une pompe péristaltique, on ajoute sol.A avec un débit de 320 ml/min ; la précipitation est instantanée. A à la fin de l'introduction de sol.A (au bout de 2 min 45 s), le pH de la suspension obtenue est de pH = 13 (soit au temps t = 0).

La régulation thermique et l'agitation du mélange sont maintenues jusqu'à t = 20 min (pH = 13,2). La suspension est essorée à l'aide de l'essoreuse-centrifugeuse.

Pour la formation du gâteau, la suspension est introduite dans l'essoreuse (500 tours/min) à l'aide d'une pompe péristaltique (débit 100 ml/min). Le premier passage suffit pour récupérer la phase solide, le pH des eaux de filtration est alors de 11,5.

Pour le lavage du gâteau, la vitesse de rotation de la centrifugeuse est de 500 tours/min. L'introduction des

eaux de lavage se fait avec un débit de 300ml/min. Au total, 35 litres d'eau sont utilisés pour le lavage, la dernière eau de lavage ayant un pH de 8,2. L'essorage final a lieu à 500 tours/min ; cette rotation est maintenue jusqu'à ce qu'il n'y ait plus d'eau en sortie de cuve ; le produit en sortie d'étuve contient 91% d'eau.

Il est ensuite lyophilisé comme précédemment pour la charge B, puis broyé au mortier et tamisé (fraction de taille inférieure à 425 µm), enfin séché à 150°C (21 heures).

On obtient ainsi 50g de charge C, de formule :

$$Na_{0,6}SiAl_{0,7}O_{3,1}(OH)_{0,3}, (H_2O)_{0,3}$$

Charge D :

La charge D est préparée comme la charge C précédente, aux différences près qui suivent :

- Sol. B : 53,22g de $NaAlO_2$ dans 300 ml d'eau bidéminéralisée ;
- 10 min après l'introduction de sol. B, pH = 13,2 ;
- à la fin de l'introduction de sol. A (2min 40s), pH =13,3 (t = 0) ;
- la régulation thermique et l'agitation du mélange sont maintenues jusqu'à t = 20min 30s (pH = 13,7) ;
- pH des eaux de filtration : 13,5 ;
- pH de la dernière eau de lavage : 7,6.

On obtient 50g de charge D, de formule :

$$Na_{0,7}SiAl_{0,7}O_{3,2}(OH)_{0,3}, (H_2O)_{0,3}$$

Charge E :

La charge E est préparée comme la charge D précédente, aux différences près qui suivent :

- KOH (68,28 g) remplace NaOH ;
- 10 min après l'introduction de sol. B, pH = 13,5 ;
- à la fin de l'introduction de sol. A (2min 50s), le pH est égal à 13,3 (t = 0) ;
- vitesse de rotation de la centrifugeuse (lavage) : 1000 tours/min, débit de la pompe péristaltique 50 ml/min;
- pH des eaux de filtration : 13,7 ;
- pH de la dernière eau de lavage : 10,1 ;
- essorage final à 1000 tours/min ;
- produit en sortie de cuve contient 88% d'eau.

On obtient ainsi 50g de charge E, de formule :

$$Na_{0,5}SiAl_{0,7}O_{3,3}(OH)_{0,3}, (H_2O)_{0,5}$$

III-2. Préparation des compositions

Les compositions testées ci-après sont préparées de manière connue, de la façon suivante : on introduit l'élastomère diénique (ou le mélange d'élastomères diéniques, le cas échéant) dans un mélangeur interne rempli à 75 %, dont la température initiale de cuve est 90°C ; puis, après un temps approprié de malaxage, par exemple de l'ordre de 1 minute, on ajoute tous les autres ingrédients, y compris la charge et l'agent de couplage associé, à l'exception du système de vulcanisation. On conduit alors un travail thermomécanique d'une durée de 10 minutes, avec une vitesse moyenne des palettes de 70 tours/min, jusqu'à obtenir une température de tombée de 160°C.

On récupère le mélange ainsi obtenu, on le refroidit puis on ajoute le système de vulcanisation (soufre et accélérateur primaire type sulfénamide) sur un mélangeur externe (homo-finisseur) à 30°C, en mélangeant le tout (phase productive) pendant un temps approprié, compris entre 5 et 12 min selon les cas.

Les compositions ainsi obtenues sont ensuite calandrées soit sous la forme de plaques (épaisseur de 2 à 3 mm) de caoutchouc pour la mesure de leurs propriétés mécaniques, soit extrudées sous la forme de bandes de roulement de pneumatiques. La vulcanisation (cuisson) est effectuée à 150°C pendant 40 min, sous pression.

Dans tous les essais qui suivent, l'aluminosilicate renforçant est présent, dans les compositions conformes à l'invention, à un taux préférentiel supérieur à 50 pce ; il constitue en outre la totalité ou plus de 90% en poids de la totalité de la charge renforçante, une fraction minoritaire (moins de 10%) de cette dernière pouvant être constituée par du noir de carbone. Dans les compositions conformes à l'invention, le taux d'agent de couplage est avantageusement inférieur à 5 pce.

III-3. Essais

A) Essai 1

Le but de cet essai est de démontrer qu'un aluminosilicate conventionnel, même en présence d'un agent de couplage performant, ne peut prétendre au qualificatif de charge inorganique renforçante.
On compare pour cela trois compositions utilisées pour la fabrication de bandes de roulement, toutes non conformes à l'invention. L'élastomère diénique est un SBR préparé en solution (SSBR), comportant 25% en masse de styrène, les motifs polybutadiène présents étant pour 58% des motifs polybutadiènes-1,2 et pour 23% des motifs polybutadiène-1,4 trans.
Ces trois compositions sont identiques aux différences près qui suivent:

- composition C-1 : silice (avec agent de couplage) ;
- composition C-2 : charge A, sans agent de couplage;
- composition C-3 : charge A, avec agent de couplage.

La silice HDS choisie pour la composition témoin C-1 est une silice de grade pneumatique présentant de manière connue un très haut pouvoir renforçant ("Zeosil" type "1165MP" de la société Rhodia), utilisée habituellement pour renforcer des bandes de roulement de pneumatiques tourisme à faible consommation d'énergie.
Dans les compositions C-2 et C-3, l'aluminosilicate est utilisé à iso-fraction volumique de charge (même volume de charge dans chacune des compositions) par rapport à la composition C-1. L'agent de couplage TESPT et l'agent de recouvrement DPG ont été introduits à isorecouvrement, en prenant en compte la densité et la surface BET des charges inorganiques utilisées, par rapport à la composition témoin.
Les tableaux 2 et 3 donnent successivement la formulation des différentes compositions (tableau 2 - taux des différents produits exprimés en pce), leurs propriétés avant et après cuisson à 150°C pendant 40 min (tableau 3). La figure 1 reproduit les courbes de module sécant vrai "M" (en MPa) en fonction de l'allongement (en %) ; ces courbes sont notées C1 à C3 et correspondent respectivement aux compositions de caoutchouc C-1 à C-3.
L'étude des différents résultats montre que les compositions C-2 et C-3 à base d'aluminosilicate présentent après cuisson un niveau de renforcement très nettement inférieur à celui de la composition témoin C-1 à base de silice HDS : contrainte à la rupture six fois plus faible, modules aux fortes déformations (M100 et M250) très nettement inférieurs, une mesure de "bound rubber" impossible en raison de compositions délitées, autant d'indicateurs clairs pour l'homme du métier d'un niveau de renforcement médiocre pour les deux compositions à base de l'aluminosilicate conventionnel.
La figure 1 annexée confirme bien les résultats ci-dessus : on note que les courbes C2 et C3 sont situées très en-dessous de la courbe témoin C1 ; ceci illustre clairement une très bas niveau de renforcement, que l'agent de couplage soit présent ou non, très nettement inférieur à celui que l'on attend d'une véritable charge inorganique renforçante telle qu'une silice HDS (courbe C1).

B) Essai 2

Le but de ce deuxième essai est de démontrer qu'un aluminosilicate renforçant tel que décrit supra peut au contraire prétendre au qualificatif de charge inorganique renforçante.
On compare pour cela deux compositions de caoutchouc diénique utilisables pour la fabrication de pneumatiques, en particulier de bandes de roulement de pneumatiques tourisme. L'élastomère diénique est un SBR préparé en solution (SSBR), comportant 25% en masse de styrène, les motifs polybutadiène présents étant pour 58% des motifs polybutadiènes-1,2 et pour 23% dés motifs polybutadiène-1,4 trans.
Ces deux compositions sont identiques aux différences près qui suivent:

- composition C-4 (témoin): silice HDS avec agent de couplage TESPT;
- composition C-5 (conforme à l'invention): charge B avec agent de couplage TESPT.

Dans la composition C-5, l'agent de couplage a été introduit à un taux de couverture surfacique sensiblement

équivalent à celui choisi pour la composition C-3 précédente (soit 9,5.10$^{-7}$ mol/m$^2$ d'aluminosilicate) ; la quantité d'agent de couplage utilisée est supérieure pour tenir compte de la plus grande surface BET de l'aluminosilicate renforçant ici testé. La composition témoin C-4 est conventionnellement chargée de silice HDS, similaire à la composition C-1 de l'essai précédent.

Les tableaux 4 et 5 donnent la formulation des différentes compositions (tableau 4 - taux des différents produits exprimés en pce), leurs propriétés après cuisson à 150°C pendant 40 min (tableau 5). La figure 2 reproduit les courbes de module "M" (en MPa) en fonction de l'allongement (en %) ; ces courbes sont notées C4 et C5 et correspondent respectivement aux compositions C-4 et C-5.

L'étude des résultats du tableau 5 montre que la composition de l'invention présente après cuisson un niveau de renforcement équivalent à celui de la composition témoin, avec des modules équivalents, notamment aux fortes déformations (M100 et M250), un rapport M250/M100 identique, des mesures identiques au test de "bound rubber", autant d'indices de renforcement bien connus de l'homme du métier qui sont là pour attester de l'activité renforçante remarquable de la charge C, en présence de l'agent de couplage. La figure 2 confirme bien ces résultats, avec des courbes C4 et C5 apparaissant quasiment confondues.

C) Essai 3

On compare ici 4 autres compositions de caoutchouc, l'élastomère étant un SSBR identique à celui utilisé pour l'essai 1 précédent.

Ces 4 compositions se distinguent par la nature de la charge inorganique renforçante utilisée :

- composition C-6 (témoin) : silice HDS ;
- composition C-7 : charge C ;
- composition C-8 : charge D ;
- composition C-9 : charge E.

Dans les compositions C-7, C-8 et C-9, toutes conformes à l'invention, l'agent de couplage TESPT a été introduit à un taux de couverture surfacique sensiblement équivalent à celui choisi pour la composition C-3 ; bien entendu, la quantité d'agent de couplage utilisée est supérieure pour tenir compte de la plus grande surface BET de l'aluminosilicate renforçant ici testé. La composition témoin C-6 est similaire à la composition C-1 de l'essai précédent.

Les tableaux 6 et 7 donnent successivement la formulation des différentes compositions, leurs propriétés avant et après cuisson à 150°C (40 min).

On constate que les compositions selon l'invention, comparées à la composition témoin, se caractérisent tout d'abord par un rapport de modules (M250/M100) voisin et une hystérèse ($\tan(\delta)_{max}$) plus basse, autant d'indices de renforcement connus de l'homme du métier et qui attestent du pouvoir renforçant inattendu des aluminosilicates testés.

D'autre part, de manière tout aussi inattendue, on observe que toutes les compositions conformes à l'invention C-7 à C-9 présentent des propriétés rhéométriques ($T_{99}$ et K) améliorées par rapport au témoin C-6 ; ainsi, sur les compositions C-7 et C-9, la vitesse de cuisson (K) est pratiquement augmentée d'un facteur deux.

On note enfin que la composition C-7, présentant le meilleur compromis global en termes de renforcement et de cinétique de cuisson est celle renforcée de l'aluminosilicate (charge C) vérifiant en combinaison les caractéristiques de surface BET (entre 60 et 200 m$^2$/g), taille $d_w$ (entre 100 et 200 nm) et vitesse de désagglomération $\alpha$ (supérieure à 2.10$^{-3}$ $\mu$m$^{-1}$/min) les plus préférentielles.

En conclusion, les aluminosilicates de synthèse spécifiques des compositions conformes à l'invention confèrent à ces dernières un nouveau compromis de propriétés avantageux, en termes de renforcement et de cinétique de cuisson, par rapport à une charge inorganique renforçante conventionnelle telle qu'une silice HDS.

L'invention trouve ainsi des applications préférentielles dans les compositions de caoutchouc destinées à la fabrication de bandes de roulement de pneumatiques présentant à la fois une faible résistance au roulement et une résistance élevée à l'usure, en particulier lorsque ces bandes de roulement sont destinées à des pneumatiques pour véhicules tourisme ou pour véhicules industriels du type Poids-lourd.

**Tableau 1**

| charge : | A | B | C | D | E |
|---|---|---|---|---|---|
| densité He (g/cm$^3$) | 2.64 | 2.24 | 2.34 | 2.33 | 2.34 |
| surface BET (m$^2$/g) | 407 | 156 | 99 | 54 | 115 |
| surface BET (m$^2$/cm$^3$) | 1075 | 349 | 232 | 126 | 269 |

(suite)

| charge : | A | B | C | D | E |
|---|---|---|---|---|---|
| $d_w$ (nm) | 2030 | 179 | 117 | 247 | 92 |
| $\alpha$ ($\mu m^{-1}$/min) | - | $6.8\ 10^{-3}$ | $2.3\ 10^{-3}$ | $9.3\ 10^{-3}$ | $1.8\ 10^{-3}$ |

**Tableau 2**

| Composition N°: | C-1 | C-2 | C-3 |
|---|---|---|---|
| SSBR (1) | 100 | 100 | 100 |
| silice HDS | 52.5 | - | - |
| charge A | - | 66 | 66 |
| agent de couplage (2) | 4.2 | - | 13.45 |
| noir de carbone (N330) | 6 | 6 | 6 |
| ZnO | 2.5 | 2.5 | 2.5 |
| acide stéarique | 2 | 2 | 2 |
| antioxydant (3) | 1.9 | 1.9 | 1.9 |
| DPG (4) | 1.05 | 3.35 | 3.35 |
| soufre | 1 | 1 | 1 |
| accélérateur (5) | 2 | 2 | 2 |
| (1) SBR solution étendu avec 37,5% d'huile aromatique (soit 37,5 pce d'huile pour 100 pce de SBR sec) ; Tg = -25°C mesurée sur SBR sec ;<br>(2) TESPT ("Si69" de la société DEGUSSA-HÜLS);<br>(3) N-1,3 diméthylbutyl N-phénylparaphénylènediamine ("Santoflex 6-PPD" de la société Flexsys);<br>(4) Diphénylguanidine ("Vulcacit D" de la société Bayer).<br>(5) N-cyclohexyl-2-benzothiazylsulfénamide ("Santocure CBS" de la société Flexsys). | | | |

**Tableau 3**

| Composition N°: | C-1 | C-2 | C-3 |
|---|---|---|---|
| M10 (MPa) | 8.5 | 7.0 | 6.5 |
| M100 (MPa) | 6.5 | 3.1 | 5.0 |
| M250 (MPa) | 17.7 | 3.0 | 5.1 |
| M250/M100 | 2.75 | 0.96 | 1.02 |
| contrainte rupture (MPa) | 19.7 | 3.0 | 3.8 |
| allongement rupture (%) | 350 | 809 | 311 |
| "Bound rubber" (%) | 34 | (*) | (*) |
| (*) mesure impossible (composition délitée) | | | |

**Tableau 4**

| Composition N°: | C-4 | C-5 |
|---|---|---|
| SSBR (1) | 100 | 100 |
| silice HDS | 52.5 | - |
| charge B | - | 56.5 |
| agent de couplage (2) | 4.2 | 4.4 |
| noir de carbone (N330) | 6 | 6 |
| ZnO | 2.5 | 2.5 |
| acide stéarique | 2 | 2 |
| antioxydant (3) | 1.9 | 1.9 |
| DPG (4) | 1.0 | 1.0 |
| soufre | 1.5 | 1.5 |
| accélérateur (5) | 2.5 | 2.5 |
| (1) à (5) : idem tableau 2. | | |

**Tableau 5**

| Composition N°: | C-4 | C-5 |
|---|---|---|
| M10 (MPa) | 9.6 | 6.9 |
| M100 (MPa) | 8.5 | 8.3 |
| M250 (MPa) | 22.7 | 22.1 |
| M250/M100 | 2.66 | 2.67 |
| "Bound rubber" (%) | 21.5 | 22.9 |

**Tableau 6**

| Composition N°: | C-6 | C-7 | C-8 | C-9 |
|---|---|---|---|---|
| SSBR (1) | 100 | | | 100 |
| silice | 52.5 | - | - | - |
| charge C | - | 58.5 | - | - |
| charge D | - | - | 58.3 | - |
| charge E | - | - | - | 58.5 |
| agent de couplage (2) | 4.2 | 2.9 | 1.6 | 3.4 |
| ZnO | 2.5 | 2.5 | 2.5 | 2.5 |
| acide stéarique | 2 | 2 | 2 | 2 |
| antioxydant (3) | 1.9 | 1.9 | 1.9 | 1.9 |
| DPG (4) | 1.0 | 0.7 | 0.4 | 0.8 |
| soufre | 1.5 | 1.5 | 1.5 | 1.5 |
| accélérateur (5) | 2.5 | 2.5 | 2.5 | 2.5 |
| (1) à (5) : idem tableau 4. | | | | |

**Tableau 7**

| Composition N°: | C-6 | C-7 | C-8 | C-9 |
|---|---|---|---|---|
| MA10 (MPa) | 8.6 | 8.0 | 5.9 | 7.7 |
| MA100 (MPa) | 9.2 | 8.8 | 7.4 | 9.2 |
| MA250 (MPa) | 24.8 | 22.5 | 17.3 | 20.8 |
| MA250/MA100 | 2.9 | 2.8 | 3.0 | 2.7 |
| $T_{99}$ (min) | 34.3 | 15.3 | 22.8 | 13.4 |
| K ($min^{-1}$) | 0.179 | 0.362 | 0.249 | 0.333 |
| K (unités relatives) | 100 | 202 | 139 | 186 |
| $\tan(\delta)_{max}$ | 0.287 | 0.245 | 0.211 | 0.204 |

## Revendications

1. Composition de caoutchouc à base d'au moins un élastomère diénique, une charge inorganique renforçante, un agent de couplage assurant la liaison entre la charge inorganique et l'élastomère, **caractérisée en ce que** ladite charge inorganique comporte un aluminosilicate de synthèse répondant à la formule :

   (I) $M_xSiAl_yO_a(OH)_b, (H_2O)_c$

   avec:

   - M cation choisi dans le groupe constitué par $K^+$, $Na^+$, $Ca^{++}$ et les mélanges de ces cations ;
   - $x>0;y>0;a\geq0;b\geq0,c\geq0$ et $a+b>0$;

   et possédant les caractéristiques suivantes :

   (a) une surface spécifique BET comprise entre 20 et 300 $m^2/g$ ;
   (b) une taille moyenne en masse de particules (notée $d_w$) comprise entre 20 et 400 nm ;
   (c) une vitesse de désagglomération aux ultrasons (notée $\alpha$) supérieure à $5.10^{-4}\mu m^{-1}/min$, mesurées selon la méthode indiquée dans la description.

2. Composition selon la revendication 1, l'élastomère diénique étant choisi dans le groupe constitué par les polybutadiènes, les polyisoprènes de synthèse, le caoutchouc naturel, les copolymères de butadiène-styrène, les copolymères de butadiène-isoprène, les copolymères de butadiène-acrylonitrile, les copolymères d'isoprène-styrène, les copolymères de butadiène-styrène-isoprène et les mélanges de ces élastomères.

3. Composition selon les revendications 1 ou 2, l'agent de couplage étant un silane ou un polysiloxane au moins bifonctionnel.

4. Composition selon l'une quelconque des revendications 1 à 3, la formule (I) vérifiant au moins l'une des caractéristiques suivantes :

   - x compris dans un domaine de 0,01 à 2 ;
   - y compris dans un domaine de 0,1 à 5 ;
   - a compris dans un domaine de 0 à 5 ;
   - b compris dans un domaine de 0 à 3 ;
   - c compris dans un domaine de 0 à 5.

5. Composition selon la revendication 4, la formule (I) vérifiant l'ensemble des caractéristiques suivantes :

   - x compris dans un domaine de 0,01 à 2 ;

- y compris dans un domaine de 0,1 à 5 ;
- a compris dans un domaine de 0 à 5 ;
- b compris dans un domaine de 0 à 3 ;
- c compris dans un domaine de 0 à 5.

**6.** Composition selon l'une quelconque des revendications 1 à 5, le taux d'aluminosilicate renforçant étant supérieur à 50 pce.

**7.** Composition selon l'une quelconque des revendications 1 à 6, la surface BET étant comprise entre 40 et 250 $m^2/g$.

**8.** Composition selon l'une quelconque des revendications 1 à 7, la taille $d_W$ étant comprise entre 50 et 300 nm.

**9.** Composition selon l'une quelconque des revendications 1 à 8, la vitesse $\alpha$ étant supérieure à $1.10^{-3}$ $\mu m^{-1}/min$, de préférence supérieure à $2.10^{-3}$ $\mu m^{-1}/min$.

**10.** Composition selon les revendications 7 ou 8, l'aluminosilicate renforçant vérifiant au moins l'une des caractéristiques suivantes :

- sa surface BET est comprise entre 60 et 200 $m^2/g$ ;
- sa taille de particules $d_W$ est comprise entre 100 et 200 nm.

**11.** Composition selon la revendication 10, l'aluminosilicate renforçant vérifiant les deux caractéristiques suivantes :

- sa surface BET est comprise entre 60 et 200 $m^2/g$ ;
- sa taille de particules $d_W$ est comprise entre 100 et 200 nm.

**12.** Procédé d'obtention d'une composition de caoutchouc utilisable pour la fabrication de pneumatiques, dans lequel on incorpore à au moins (i) un élastomère diénique, au moins (ii) une charge inorganique renforçante et (iii) un agent de couplage assurant la liaison entre la charge inorganique et l'élastomère, **caractérisé en ce que** ladite charge inorganique comporte un aluminosilicate de synthèse répondant à la formule :

(I) $M_x\ Si\ Al_y\ O_a\ (OH)_b,\ (H_{2O})_c$

avec:

- M cation choisi dans le groupe constitué par $K^+$, $Na^+$, $Ca^{++}$ et les mélanges de ces cations ;
- $x>0;y>0;a\geq0;b\geq0,c\geq0$ et $a+b>0$;

et possédant les caractéristiques suivantes :

(a) une surface spécifique BET comprise entre 20 et 300 $m^2/g$ ;
(b) une taille moyenne en masse de particules (notée $d_W$) comprise entre 20 et 400 nm ;
(c) une vitesse de désagglomération aux ultrasons (notée $\alpha$) supérieure à $5.10^{-4}$ $\mu m^{-1}/min$.

et **en ce qu'**on malaxe thermomécaniquement le tout, en une ou plusieurs étapes, jusqu'à atteindre une température maximale comprise entre 110°C et 190°C.

**13.** Utilisation d'une composition de caoutchouc conforme à l'une quelconque des revendications 1 à 11 pour la fabrication d'articles en caoutchouc.

**14.** Utilisation à titre de charge renforçante, dans une composition de caoutchouc diénique, d'un aluminosilicate de synthèse répondant à la formule :

(I) $M_xSiAl_yO_a\ (OH)_b,\ (H_2O)_c$

avec:

- M cation choisi dans le groupe constitué par $K^+$, $Na^+$, $Ca^{++}$ et les mélanges de ces cations ;

- $x>0; y>0; a\geq 0; b\geq 0, c\geq 0$ et $a+b>0$;

et possédant les caractéristiques suivantes :

(a) une surface spécifique BET comprise entre 20 et 300 $m^2/g$ ;
(b) une taille moyenne en masse de particules (notée $d_W$) comprise entre 20 et 400 nm ;
(c) une vitesse de désagglomération aux ultrasons (notée $\alpha$) supérieure à $5.10^{-4}$ $\mu m^{-1}/min$.

**15.** Article en caoutchouc comportant une composition selon l'une quelconque des revendications 1 à 11.

**16.** Produit semi-fini pour pneumatique comportant une composition de caoutchouc conforme à l'une quelconque des revendications 1 à 11, ce produit étant choisi de préférence dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

**17.** Pneumatique comportant une composition de caoutchouc selon l'une quelconque des revendications 1 à 11.

**18.** Bande de roulement de pneumatique comportant une composition de caoutchouc selon l'une quelconque des revendications 1 à 11.

## Claims

**1.** A rubber composition based on at least one diene elastomer, one reinforcing inorganic filler, a coupling agent providing the bond between the inorganic filler and the elastomer, **characterised in that** said inorganic filler comprises a synthetic aluminosilicate of the formula:

$$\text{(I)} \qquad M_xSiAl_yO_a(OH)_b, (H_2O)_c$$

where:

- M is a cation selected from among the group consisting of $K^+$, $Na^+$, $Ca^{++}$ and mixtures of these cations;
- $x > 0$; $y > 0$; $a \geq 0$; $b \geq 0$, $c \geq 0$ and $a+b>0$;

and having the following characteristics:

(a) a BET specific surface area of between 20 and 300 $m^2/g$;
(b) an average particle size by mass ($d_W$) of between 20 and 400 nm;
(c) an ultrasound disagglomeration rate ($\alpha$) greater than $5x10^{-4}$ $\mu m^{-1}/min$;

measured according to the method indicated in the specification.

**2.** A composition according to Claim 1, the diene elastomer being selected from the group consisting of polybutadienes, synthetic polyisoprenes, natural rubber, butadiene/styrene copolymers, butadiene/isoprene copolymers, butadiene/acrylonitrile copolymers, isoprene/styrene copolymers, butadiene/styrene/isoprene copolymers and mixtures of these elastomers.

**3.** A composition according to Claims 1 or 2, the coupling agent being a silane or a polysiloxane which is at least bifunctional.

**4.** A composition according to any one of Claims 1 to 3, formula (I) satisfying at least one of the following characteristics:

- x within a range from 0.01 to 2;
- y within a range from 0.1 to 5;
- a within a range from 0 to 5;
- b within a range from 0 to 3;
- c within a range from 0 to 5.

**5.** A composition according to Claim 4, formula (I) satisfying all of the following characteristics:

- x within a range from 0.01 to 2;
- y within a range from 0.1 to 5;
- a within a range from 0 to 5;
- b within a range from 0 to 3;
- c within a range from 0 to 5.

**6.** A composition according to any one of Claims 1 to 5, the amount of reinforcing aluminosilicate being greater than 50 phr.

**7.** A composition according to any one of Claims 1 to 6, the BET surface area being between 40 and 250 $m^2/g$.

**8.** A composition according to any one of Claims 1 to 7, the size $d_W$ being between 50 and 300 nm.

**9.** A composition according to any one of Claims 1 to 8, the rate $\alpha$ being greater than $1x10^{-3}$ $\mu m^{-1}/min$, preferably greater than $2x10^{-3}$ $\mu m^{-1}/min$.

**10.** A composition according to Claims 7 or 8, the reinforcing aluminosilicate satisfying at least one of the following characteristics:

- its BET surface area is of between 60 and 200 $m^2/g$;
- its particle size $d_W$ is between 100 and 200 nm.

**11.** A composition according to Claim 10, the reinforcing aluminosilicate satisfying both the following characteristics:

- its BET surface area is of between 60 and 200 $m^2/g$;
- its particle size $d_W$ is between 100 and 200 nm.

**12.** A process for obtaining a rubber composition usable for the manufacture of tyres, in which there are incorporated in at least (i) one diene elastomer, at least (ii) one reinforcing inorganic filler and (iii) a coupling agent providing the bond between the inorganic filler and the elastomer, **characterised in that** said inorganic filler comprises a synthetic aluminosilicate of the formula:

$$\text{(I)} \qquad M_xSiAl_yO_a(OH)_b, (H_2O)_c$$

where:

- M is a cation selected from among the group consisting of $K^+$, $Na^+$, $Ca^{++}$ and mixtures of these cations;
- $x > 0$; $y > 0$; $a \geq 0$; $b \geq 0$, $c \geq 0$ and $a+b>0$;

and having the following characteristics:

(a) a BET specific surface area of between 20 and 300 $m^2/g$;
(b) an average particle size by mass ($d_W$) of between 20 and 400 nm;
(c) an ultrasound disagglomeration rate ($\alpha$) greater than $5x10^{-4}$ $\mu m^{-1}/min$.

and **in that** the entire mixture is kneaded thermomechanically, in one or more stages, until a maximum temperature of between 110°C and 190°C is reached.

**13.** The use of a rubber composition according to any one of Claims 1 to 11 for the manufacture of rubber articles.

**14.** The use, as reinforcing filler, in a diene rubber composition, of a synthetic aluminosilicate of the formula:

$$\text{(I)} \qquad M_xSiAl_yO_a(OH)_b, (H_2O)_c$$

where:

- M is a cation selected from among the group consisting of $K^+$, $Na^+$, $Ca^{++}$ and mixtures of these cations;
- $x > 0$; $y > 0$; $a \geq 0$; $b \geq 0$, $c \geq 0$ and $a+b>0$;

and having the following characteristics:

(a) a BET specific surface area of between 20 and 300 $m^2/g$;
(b) an average particle size by mass ($d_W$) of between 20 and 400 nm;
(c) an ultrasound disagglomeration rate ($\alpha$) greater than $5x10^{-4}$ $\mu m^{-1}/min$.

**15.** A rubber article comprising a composition according to any one of Claims 1 to 11.

**16.** A semi-finished product for tyres, comprising a rubber composition according to any one of Claims 1 to 11, this product being selected preferably from among the group comprising treads, underlayers for these treads, crown plies, sidewalls, carcass plies, beads, protectors, inner tubes and airtight internal rubbers for tubeless tyres.

**17.** A tyre comprising a rubber composition according to any one of Claims 1 to 11.

**18.** A tyre tread comprising a rubber composition according to any one of Claims 1 to 11.

## Patentansprüche

**1.** Kautschukzusammensetzung auf Grundlage mindestens eines Dien-Elastomers, eines verstärkenden anorganischen Füllstoffs, eines Kupplungsmittels, das die Verbindung zwischen dem anorganischen Füllstoff und dem Elastomer sicherstellt, **dadurch gekennzeichnet, dass** der anorganische Füllstoff ein synthetisches Aluminosilicat aufweist, das der folgenden Formel entspricht:

(I) $$M_xSiAl_yO_a(OH)_b, (H_2O)_c$$

mit:

- M Kation, das aus der Gruppe ausgewählt ist, welche aus $K^+$, $Na^+$, $Ca^{++}$ und den Mischungen dieser Kationen besteht;
- $x > 0$; $y > 0$; $a \geq 0$; $b \geq 0$, $c \geq 0$ und $a+b > 0$;

und das die folgenden kennzeichnenden Eigenschaften besitzt:

(a) eine spezifische BET-Oberfläche im Bereich von 20 bis 300 $m^2/g$;
(b) eine massenbezogene mittlere Partikelgröße (als $d_W$ bezeichnet), die im Bereich von 20 bis 400 nm liegt;
(c) eine Ultraschall-Entklumpungsgeschwindigkeit (als $\alpha$ bezeichnet) von mehr als $5.10^{-4}$ $\mu m^{-1}/min$,

gemessen gemäß dem Verfahren, das in der Beschreibung angegeben ist.

**2.** Zusammensetzung nach Anspruch 1, wobei das Dien-Elastomer aus der Gruppe ausgewählt ist, die aus den Polybutadienen, den synthetischen Polyisoprenen, natürlichem Kautschuk, den Butadien-Styrol-Copolymeren, den Butadien-Isopren-Copolymeren, den Butadien-Acrylnitril-Copolymeren, den Isopren-Styrol-Copolymeren, den Butadien-Styrol-Isopren-Copolymeren und den Mischungen dieser Elastomere besteht.

**3.** Zusammensetzung nach den Ansprüchen 1 oder 2, wobei es sich bei dem Kupplungsmittel um ein Silan oder ein Polysiloxan mit mindestens zwei funktionellen Gruppen handelt.

**4.** Zusammensetzung nach einem beliebigen der Ansprüche 1 bis 3, wobei die Formel (I) mindestens einem der folgenden Eigenschaftsmerkmale genügt:

- x liegt im Bereich von 0,01 bis 2;
- y liegt im Bereich von 0,1 bis 5;
- a liegt im Bereich von 0 bis 5;
- b liegt im Bereich von 0 bis 3;

- c liegt im Bereich von 0 bis 5.

5. Zusammensetzung nach Anspruch 4, wobei die Formel (I) sämtlichen der folgenden Eigenschaftsmerkmale genügt:

- x liegt im Bereich von 0,01 bis 2;
- y liegt im Bereich von 0,1 bis 5;
- a liegt im Bereich von 0 bis 5;
- b liegt im Bereich von 0 bis 3;
- c liegt im Bereich von 0 bis 5.

6. Zusammensetzung nach einem beliebigen der Ansprüche 1 bis 5, wobei der Gehalt an verstärkendem Aluminosilicat mehr als 50 phr beträgt.

7. Zusammensetzung nach einem beliebigen der Ansprüche 1 bis 6, wobei die BET-Oberfläche im Bereich von 40 bis 250 $m^2/g$ liegt.

8. Zusammensetzung nach einem beliebigen der Ansprüche 1 bis 7, wobei die Größe $d_W$ im Bereich von 50 bis 300 nm liegt.

9. Zusammensetzung nach einem beliebigen der Ansprüche 1 bis 8, wobei die Geschwindigkeit $\alpha$ mehr als $1.10^3$ $\mu m^{-1}/min$, vorzugsweise mehr als $2.10^{-3}$ $\mu m^{-1}/min$ beträgt.

10. Zusammensetzung nach den Ansprüchen 7 oder 8, wobei das verstärkende Aluminosilicat mindestens einem der folgenden Eigenschaftsmerkmale genügt:

- seine spezifische BET-Oberfläche liegt im Bereich von 60 bis 200 $m^2/g$;
- seine Partikelgröße $d_W$ liegt im Bereich von 100 bis 200 nm.

11. Zusammensetzung nach Anspruch 10, wobei das verstärkende Aluminosilicat den beiden folgenden Eigenschaftsmerkmalen genügt:

- seine spezifische BET-Oberfläche liegt im Bereich von 60 bis 200 $m^2/g$;
- seine Partikelgröße $d_W$ liegt im Bereich von 100 bis 200 nm.

12. Verfahren zum Erhalt einer Kautschukzusammensetzung, die zur Herstellung von Luftreifen verwendet werden kann, wobei mindestens (i) einem Dien-Elastomer mindestens (ii) ein verstärkender anorganischer Füllstoff und (iii) ein Kupplungsmittel, welches die Verbindung zwischen dem anorganischen Füllstoff und dem Elastomer sicherstellt, beigemischt werden, **dadurch gekennzeichnet, dass** der anorganische Füllstoff ein synthetisches Aluminosilicat aufweist, das der folgenden Formel entspricht:

$$\text{(I)} \qquad M_xSiAl_yO_a(OH)_b, (H_2O)_c$$

mit:

- M Kation, das aus der Gruppe ausgewählt ist, welche aus $K^+$, $Na^+$, $Ca^{++}$ und den Mischungen dieser Kationen besteht;
- $x > 0$; $y > 0$; $a \geq 0$; $b \geq 0$, $c \geq 0$ und $a+b > 0$;

und das die folgenden kennzeichnenden Eigenschaften besitzt:

(a) eine spezifische BET-Oberfläche im Bereich von 20 bis 300 $m^2/g$;
(b) eine massenbezogene mittlere Partikelgröße (als $d_W$ bezeichnet), die im Bereich von 20 bis 400 nm liegt;
(c) eine Ultraschall-Entklumpungsgeschwindigkeit (als $\alpha$ bezeichnet) von mehr als $5.10^{-4}$ $\mu m^{-1}/min$.

und dadurch, dass das Ganze in einem oder mehreren Schritten thermomechanisch durchmischt wird, bis eine Höchsttemperatur erzielt wird, die im Bereich von 110 °C bis 190 °C liegt;

13. Verwendung einer Kautschukzusammensetzung gemäß einem beliebigen der Ansprüche 1 bis 11 zur Herstellung

von Gegenständen aus Kautschuk.

**14.** Verwendung eines synthetischen Aluminosilicats als verstärkender Füllstoff in einer Dien-Kautschukzusammensetzung, das der folgenden Formel entspricht:

(I) $M_xSiAl_yO_a(OH)_b, (H_2O)_c$

mit:

- M Kation, das aus der Gruppe ausgewählt ist, welche aus $K^+$, $Na^+$, $Ca^{++}$ und den Mischungen dieser Kationen besteht;
- $x > 0$; $y > 0$; $a \geq 0$; $b \geq 0$, $c \geq 0$ et $a+b > 0$;

und das die folgenden Eigenschaftsmerkmale besitzt:

(a) eine spezifische BET-Oberfläche im Bereich von 20 bis 300 $m^2/g$;
(b) eine massenbezogene mittlere Partikelgröße (als $d_W$ bezeichnet), die im Bereich von 20 bis 400 nm liegt;
(c) eine Ultraschall-Entklumpungsgeschwindigkeit (als $\alpha$ bezeichnet) von mehr als $5.10^{-4}$ $\mu m^{-1}/min$.

**15.** Gegenstand aus Kautschuk, der eine Zusammensetzung nach einem beliebigen der Ansprüche 1 bis 11 aufweist.

**16.** Halbzeugartiges Produkt für Luftreifen, das eine Kautschukzusammensetzung gemäß einem beliebigen der Ansprüche 1 bis 11 aufweist, wobei dieses Produkt vorzugsweise aus der Gruppe ausgewählt ist, die aus den Laufflächen, den Unterbauschichten dieser Laufflächen, den radial außenliegenden Gewebelagen, den Seitenwänden, den Karkassengewebelagen, den Wulsten, den Schutzvorrichtungen, den Luftschläuchen und den luftdichten Innengummischichten für schlauchlose Reifen besteht.

**17.** Luftreifen, der eine Kautschukzusammensetzung nach einem beliebigen der Ansprüche 1 bis 11 aufweist.

**18.** Luftreifenlauffläche, die eine Kautschukzusammensetzung nach einem beliebigen der Ansprüche 1 bis 11 aufweist.

**Fig. 1**

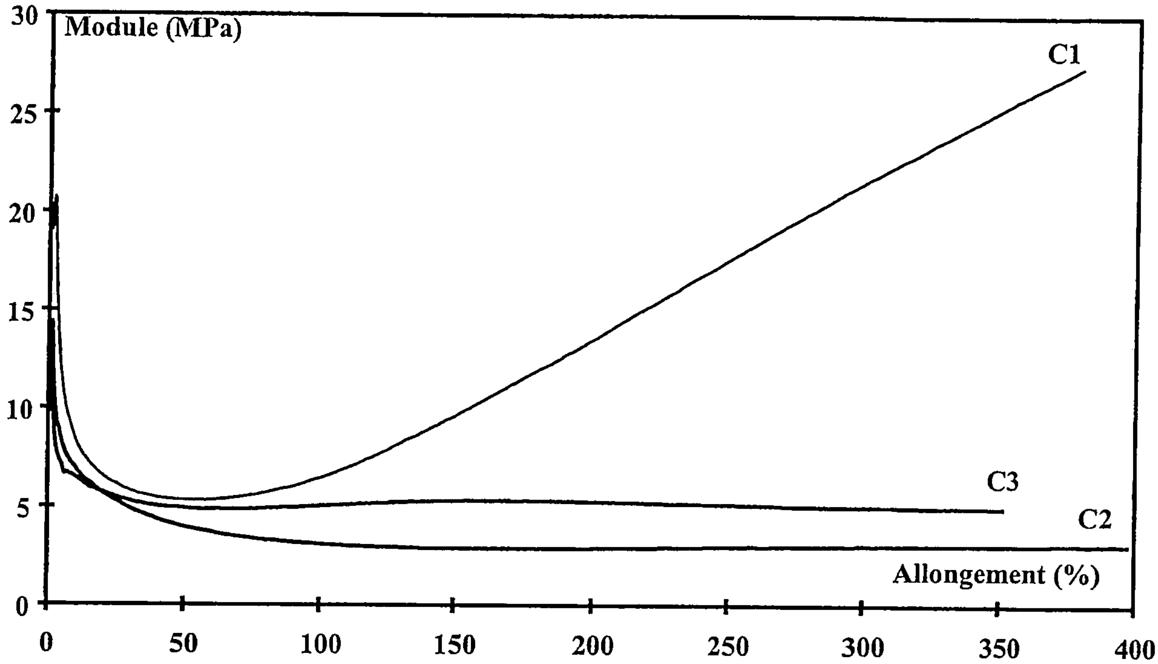
Module (MPa)
30
25
20
15
10
5
0
C1
C3
C2
Allongement (%)
0
50
100
150
200
250
300
350
400

**Fig. 2**

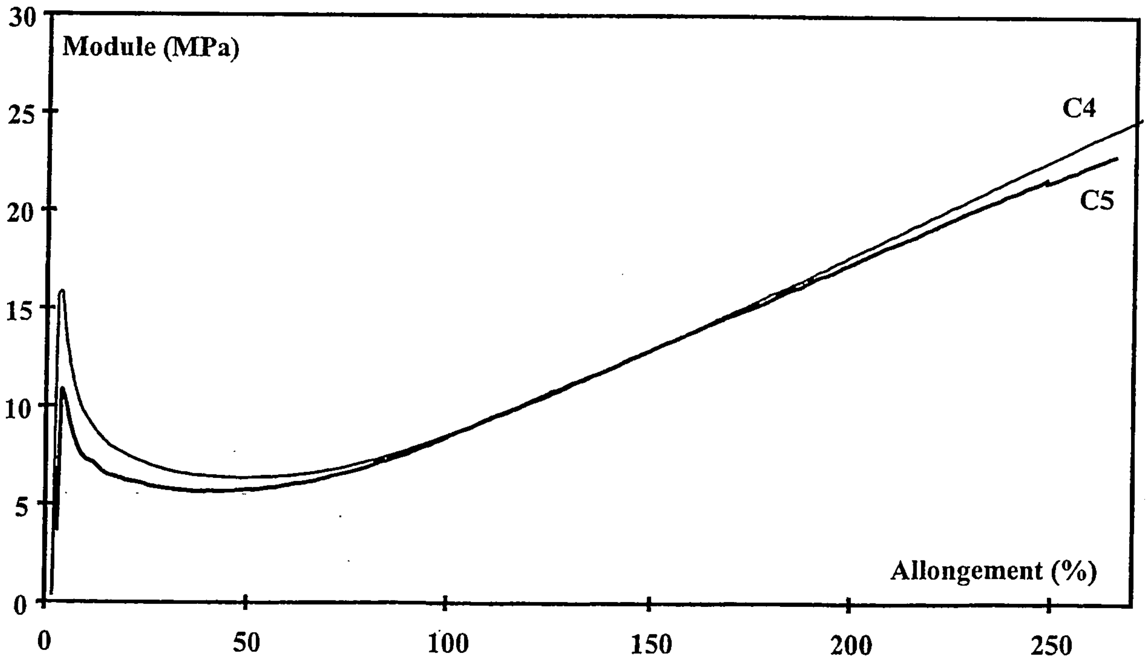
Module (MPa)
30
25
20
15
10
5
0
C4
C5
Allongement (%)
0
50
100
150
200
250

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 501227 A
- EP 692492 A
- EP 692493 A
- EP 735088 A
- EP 810258 A
- WO 9902590 A
- WO 9902602 A
- WO 9928376 A
- WO 0196442 A
- WO 0230939 A
- WO 0231041 A
- WO 02083782 A
- EP 697432 A
- WO 9928380 A
- WO 0073372 A
- WO 0073373 A
- EP 0501227 A
- EP 0735088 A
- EP 0810258 A
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- EP 1043357 A
- WO 0005300 A
- WO 0005301 A
- WO 0155252 A
- WO 0155253 A
- WO 0210269 A
- EP 692452 A


### Littérature non-brevet citée dans la description


- **Brunauer-Emmett-Teller.** *The Journal of the American Chemical Society,* Février 1938, vol. 60, 309
- **E. Lippmaa et al.** Structural Studies of Silicates by Solid-State High Resolution Si NMR. *J. Am. Chem. Soc.,* 1980, vol. 102, 4889-4893
- *Plastics, Rubber and Composites Processing and Applications,* 1996, vol. 25 (7), 327
- *Rubber Chemistry and Technology,* 1996, vol. 69, 325
- **B. M. De Witte ; J. B. Uytterhoeven.** Acid and Alkaline Sol-Gel Synthesis of Amorphous Aluminosilicates, Dry Gel properties, and Their Use in Probing Sol Phase Reactions. *Journal of Colloid and Interface Science,* 1996, vol. 181, 200-207